(19) Europäisches Patentamt
European Patent Office
Office européen des brevets

(11) **EP 3 890 279 B1**

(12) **EUROPEAN PATENT SPECIFICATION**

(45) Date of publication and mention
of the grant of the patent:
**17.09.2025 Bulletin 2025/38**

(21) Application number: **21165309.2**

(22) Date of filing: **26.03.2021**

(51) International Patent Classification (IPC):
*H04L 67/1097* (2022.01)   *H04L 49/20* (2022.01)

(52) Cooperative Patent Classification (CPC):
**H04L 67/1097; H04L 49/208**

(54) **NETWORK INFORMATION TRANSMISSION SYSTEM**

NETZWERKINFORMATIONSÜBERTRAGUNGSSYSTEM

SYSTÈME DE TRANSMISSION D'INFORMATIONS DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2020 US 202016833715**

(43) Date of publication of application:
**06.10.2021 Bulletin 2021/40**

(73) Proprietor: **Mellanox Technologies, Ltd.**
**2069200 Yokneam (IL)**

(72) Inventors:
• **PIASETZKY, Yonatan**
**43662 Raanana (IL)**
• **KADOSH, Matty**
**43662 Raanana (IL)**
• **LO, Alan**
**43662 Raanana (IL)**
• **KFIR, Aviv**
**43662 Raanana (IL)**

• **GAFNI, Barak**
**43662 Raanana (IL)**

(74) Representative: **Kramer, Dani et al**
**Mathys & Squire**
**The Shard**
**32 London Bridge Street**
**London SE1 9SG (GB)**

(56) References cited:
**CN-A- 110 704 361     US-A1- 2020 382 329**

• ZHU YIBO YIBO@CS UCSB EDU ET AL: "Packet-
Level Telemetry in Large Datacenter Networks",
HOT TOPICS IN MIDDLEBOXES AND NETWORK
FUNCTION VIRTUALIZATION, ACM, 2 PENN
PLAZA, SUITE 701 NEW YORK NY 10121-0701
USA, 17 August 2015 (2015-08-17), pages 479 -
491, XP058513428, ISBN: 978-1-4503-3540-9,
DOI: 10.1145/2785956.2787483

**Description**

FIELD OF THE INVENTION

The present invention relates to networked system/s in general, and particularly but not exclusively to networked system/s which send information to a remote system, further particularly for remote diagnosis of issues in the networked systems.

BACKGROUND OF THE INVENTION

CN110704361A describes a RDMA data sending method, which is applied to a sending end, wherein the sending end is provided with RDMA equipment, and the RDMA equipment acquires original data to be sent; the RDMA equipment at the sending end compresses the original data by using a preset compression method to obtain compressed original data; the RDMA equipment at the sending end encapsulates the compressed original data into a data packet and transmits the data packet to a receiving end, wherein the data packet carries a method mark corresponding to the preset compression method; as such, the raw data is compressed and transmitted at the hardware level by the sending RDMA device.

DOI 10.1145/2785956.2787483 describes a packet-level network telemetry system for large DCNs.

Certain systems which send information to a remote system, in some cases for remote diagnosis of issues in the systems which send the information, are known.

SUMMARY OF THE INVENTION

The invention is defined by the claims. In order to illustrate the invention, aspects and embodiments which may or may not fall within the scope of the claims are described herein.

A system which sends network information to a location remote to the network or remote to a component of the network is also termed herein a "network telemetry system" (in various grammatical forms). The term "network telemetry system" is not meant to be limited to "telemetry" *per se,* but rather is to be understood in terms of the foregoing definition. Without limiting the generality of the foregoing, such information may include information which is useful for diagnosis of problems, status, or issues in the network system. Network information sent via a network telemetry system is also termed herein "network telemetry information" (in various grammatical forms).

The present invention, in certain exemplary embodiments thereof, seeks to provide improved systems and methods for network systems diagnosis, including improved network telemetry systems.

There is thus provided in accordance with an exemplary embodiment of the present invention a network information transmission system including: a packet handling device configured to duplicate or divert one or more packets traversing the packet handling device, the packet handling device including a control plane configured to open a remote direct memory access (RDMA) connection with a destination external to the network information transmission system, an encapsulator configured to encapsulate the one or more duplicated or diverted packets, producing one or more encapsulated packets, and a transmitter configured to transmit the one or more encapsulated packets, via the RDMA connection, to the destination external to the network information transmission system.

Further in accordance with an exemplary embodiment of the present invention the packet handling device includes one of the following: a switch, and a router.

Still further in accordance with an exemplary embodiment of the present invention the one or more encapsulated packets include telemetry information.

Additionally in accordance with an exemplary embodiment of the present invention the packet handling device further includes a mirror decision unit configured to duplicate the one or more packets before encapsulation thereof, and the encapsulator encapsulates the one or more duplicated packets.

Moreover in accordance with an exemplary embodiment of the present invention the RDMA connection transits an internet protocol (IP) network.

Further in accordance with an exemplary embodiment of the present invention the RDMA connection includes a RDMA over converged Ethernet (RoCE) connection.

Still further in accordance with an exemplary embodiment of the present invention the RoCE connection includes one of: an unreliable connection (UC), and a reliable connection.

Additionally in accordance with an exemplary embodiment of the present invention the RoCE connection includes a RoCEv2 connection.

Moreover in accordance with an exemplary embodiment of the present invention destination external to the network information transmission system includes a collector system.

Further in accordance with an exemplary embodiment of the present invention the collector system includes a network element and collector memory.

Still further in accordance with an exemplary embodiment of the present invention the network element includes a network interface controller (NIC).

There is also provided in accordance with another exemplary embodiment of the present invention a network information transmission method including, in a packet handling device of a network information transmission system, duplicating or diverting one or more packets traversing the packet handling device, opening a remote direct memory access (RDMA) connection with a destination external to the network information transmission system, encapsulating the one or more duplicated or diverted packets, producing one or more encapsulated packets, and transmitting the one or more encapsulated packets, via the RDMA connection, to the destination external to the network information transmission system.

Further in accordance with an exemplary embodiment of the present invention the one or more encapsulated packets include telemetry information.

Still further in accordance with an exemplary embodiment of the present invention the method further includes duplicating the one or more packets before encapsulation thereof, and wherein the one or more duplicated packets are encapsulated.

Additionally in accordance with an exemplary embodiment of the present invention the RDMA connection transits an internet protocol (IP) network.

Moreover in accordance with an exemplary embodiment of the present invention the RDMA connection includes a RDMA over converged Ethernet (RoCE) connection.

Further in accordance with an exemplary embodiment of the present invention the RoCE connection includes one of: an unreliable connection (UC), and a reliable connection.

Still further in accordance with an exemplary embodiment of the present invention the destination external to the network information transmission system includes a collector system.

Additionally in accordance with an exemplary embodiment of the present invention the collector system includes a network element and collector memory.

Moreover in accordance with an exemplary embodiment of the present invention the network element includes a network interface controller (NIC).

Any feature of one aspect or embodiment may be applied to other aspects or embodiments, in any appropriate combination. In particular, any feature of a method aspect or embodiment may be applied to an apparatus aspect or embodiment, and vice versa.

BRIEF DESCRIPTION OF THE DRAWINGS

The present invention will be understood and appreciated more fully from the following detailed description, taken in conjunction with the drawings in which:

Fig. 1A is a simplified block diagram illustration of a network information transmission system constructed and operative in accordance with an exemplary embodiment of the present invention;

Fig 1B is a partly pictorial, partly block-diagram illustration of a tap aggregation system, useful for understanding certain modes of operation of the exemplary embodiment of Fig. 1A;

Fig. 2 is a simplified flowchart illustration of an exemplary method of operation of the system of Fig. 1; and

Fig. 3 is a simplified flowchart illustration of an exemplary method of operation of a portion of the method of Fig. 2.

DETAILED DESCRIPTION OF AN EMBODIMENT

By way of general introduction, it is believed that the following discussion represents a general overview of network information transmission systems (with telemetry systems being used as a particular non-limiting example); however, no statement made herein is meant to be a characterization of known art in the field:

In certain networks, network information is frequently or constantly collected, and may be sent as network telemetry information, in order to diagnose and treat problems that may arise in the network. Such collection and sending of network telemetry information may be done on a number of different timescales which are chosen in order to address various issues. For example, and without limiting the generality of the foregoing, hourly data can be stored and analyzed to monitor system health, while second-resolution data can be used to alert for link failures, etc. One possible configuration in such networks is for a local switch CPU, using cyclic direct memory access (DMA) to "digest" telemetry events and to send those events to some collector (typically, for analysis at the collector). Although the example of a switch is used herein for purposes of simplicity of description, it is appreciated that a router may alternatively be used in certain exemplary embodiments, *mutatis mutandis.* This configuration raises the problem of high switch CPU load requirements and is bound by the available bandwidth of packet processing in the switch CPU.

In another possible configuration, all telemetry events are tunneled as traffic to some collector, which needs to digest the received traffic and store the traffic somewhere. In this configuration, there may be problems of high CPU load in the collector, and the need to constantly pull data by the collector in order not to lose any required data (generally stored in non-cyclic memory).

Both configurations result in low speed of processing of telemetry data, and inability to handled high resolution data.

Furthermore, at the collector side, the non-cyclic memory needs to be constantly "pulled" (read) in order to not lose relevant data.

In order to improve on the type of system discussed immediately above (such as, by way of non-limiting example, to enable performing of microburst analysis and real-time congestion control), collecting network information with microsecond resolution may be required. Current solutions relating to network information transmission systems are believed to be unable to cope with the required temporal resolution (microsecond) and with the required number of packets per second (pps) which would need to be transmitted.

In some exemplary embodiments of the present invention, an appropriate switch (such as, by way of non-limiting example, a Spectrum®-2 Ethernet Switch ASIC, commercially available from Mellanox Technologies, Ltd) may be used, as described further herein, to stream relevant events (such as, by way of non-limiting example, telemetry events) using remote direct memory access (RDMA), such as, by way of non-limiting example, RDMA over Converged Ethernet (RoCE); this allows achieving the necessary pps and managing latency requirements, while freeing CPU resources from needing to handle the network. Without limiting the generality of the foregoing, in certain exemplary embodiments non-Ethernet switches may alternatively be used, such as, for example, InfiniBand switches (which are also, for example, commercially available from Mellanox Technologies, Ltd).

In some exemplary embodiments of the present invention, handling of events (such as, by way of non-limiting example, telemetry events) is enabled using hardware-handled RoCE, which may comprise RoCE unreliable connection/s (UC). The term "hardware-handled", as used herein, relates to communications in which (after opening a connection, which may involve the use of software), packets are sent via hardware without need of software intervention. One non-limiting example of such a system is described in US Patent 7,013,419 to Kagan et al, the disclosure of which is hereby incorporated herein by reference.

As described above in the general overview of telemetry systems, some such switch-based systems are believed to use one or more CPUs of the switch to poll cyclic direct memory access (DMA) buffers, analyze ("digest") the result, and send the analyzed result to a collector. Such an approach is believed to use a high amount of CPU (both on the switch and on the collector), and to result in relatively slow packet handling; "slow" in this context refers to packet handling at a rate of a few hundreds of thousands of packets per second, perhaps as much as a few million packets per second. In some exemplary embodiments of the present invention using (as described above) a hardware-handled RoCE connection, the switch may be enabled to handle two or even three orders of magnitude more packets per second than in the approach just described, without requiring CPU utilization on either the collector or the switch side for sending packets (in general, only a small amount of CPU is required on the collector side for "pulling" packets out of local memory).

Due to the nature of RDMA, in which remote (collector) memory is directly accessed, there is no need to analyze ("digest") information while storing; the analysis may take place entirely on the collector side when processing the previously-stored information. Thus, the solution is viable for providing microsecond-resolution telemetry or reporting of other events, which may be useful for (by way of non-limiting example) handling congestion control, handling of buffer problems, and handling microbursts. One specific non-limiting example is tap aggregation, in which one switch can collect information from a number of places (hosts, CPUs, etc.). In tap aggregation, as is known in the art, each switch produces data, which is sent to a tap aggregator. A tap aggregator is generally a switch which performs aggregation (in some cases, only performs aggregation), and then sends the aggregated packets onwards. In certain exemplary embodiments of the present invention enabling tap aggregation, improved performance may be achieved using RDMA, as described above and below.

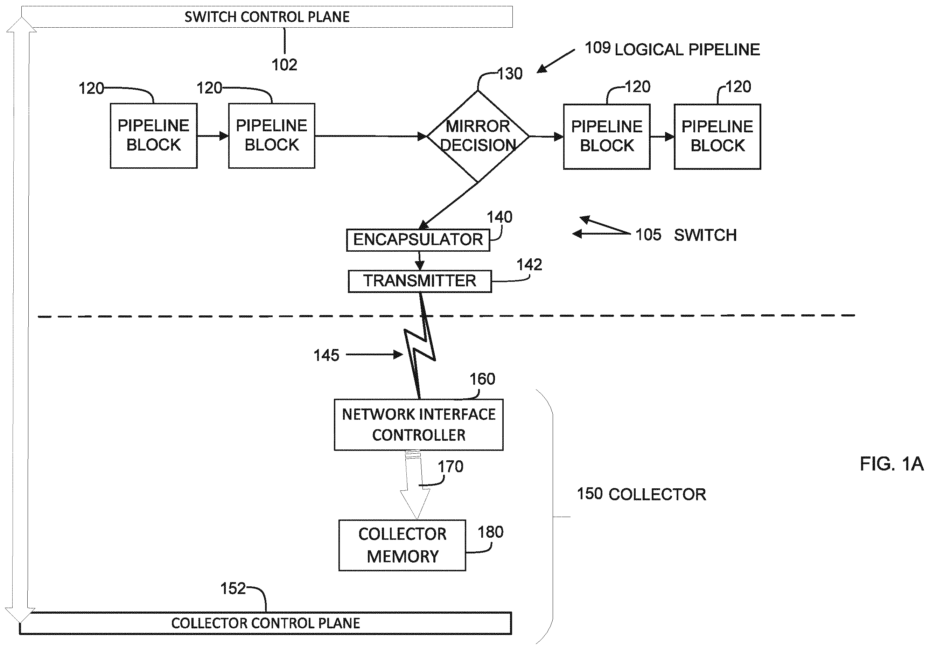

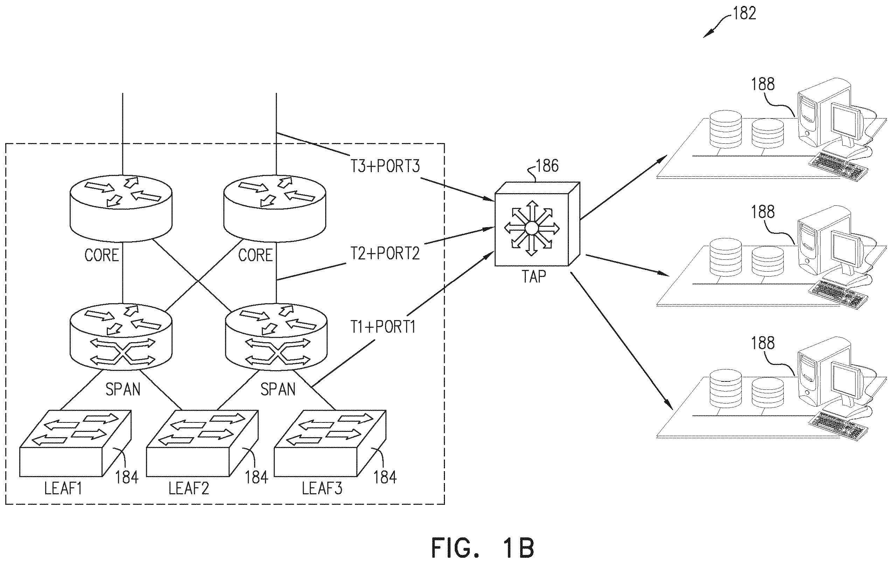

Reference is now made to Fig. 1A, which is a simplified block diagram illustration of a network information transmission system constructed and operative in accordance with an exemplary embodiment of the present invention. The system of Fig. 1 comprises a switch 105, which comprises a logical pipeline 109 for switching packets. (As stated above, the example of a switch is non-limiting; persons skilled in the art will appreciate that a router may also be used in certain exemplary embodiments of the present invention. The term "packet handling device" may be used herein to designate either a switch or a router.) The logical pipeline 109 is shown as comprising a plurality of pipeline blocks 120; only four such pipeline blocks 120 are shown for simplicity of depiction and description, it being appreciated that a larger (or smaller) number of pipeline blocks 120 may be comprised in the switch 105.

The switch 105 of Fig. 1 also comprises the following elements, the operation of which is described below:

a mirror decision unit 130;
an encapsulator 140; and
a transmitter 142.

The switch 105 of Fig. 1 is shown as being in communication, via a network connection 145, with a collector 150. It is appreciated that, in certain exemplary embodiments of the present invention, the network connection 145 and the collector 150 are external to those exemplary embodiments, so that the subcombination comprising the switch 105 comprises an exemplary embodiment of the present invention.

The collector 150 of Fig. 1 comprises a network element, such as (by way of non-limiting example) a network interface controller (NIC) 160 on the side of the collector. One non-limiting example of an appropriate NIC for such a connection is a ConnectX NIC, commercially available from Mellanox Technologies, Ltd.

The collector 150 of Fig. 1 also comprises a direct memory access (DMA) channel 170, and a collector memory 180.

An exemplary mode of operation of the system of Fig. 1 is now briefly described. The switch 105 (in particular, generally a control plane 102 of the switch, in communication with a control plane 152 of the collector) opens an Unreliable Connection (UC) via RoCE (generally but not necessarily using RoCEv2, which is known to use unreliable connections), over the network connection 145, to the collector 150. While the example of a UC is used herein, it is appreciated that a reliable connection could alternatively be used.

The UC is generally opened from the switch to the collector 150 via the network interface controller 160. In some exemplary embodiments, opening such a UC may be done in software using an appropriate software stack (such as, by way of non-limiting example, SoftRoCE (a version of which is publicly available via the World Wide Web at github.com/-SoftRoCE); it being particularly understood that the example of software (and in particular of SoftRoCE) in this context is not meant to be limiting.

Once a UC as described immediately above is opened, packets may be sent from the switch 105 to the collector 150. Packets which are to be sent are, in general, appropriately encapsulated by the encapsulator 140 (as is known for RoCEv2, for example) for sending. The encapsulated packets are sent by the transmitter 142 via the UC to the collector 150.

Reference is now additionally made to Fig. 1B, which is a partly pictorial, partly block-diagram illustration of a tap aggregation system, useful for understanding certain modes of operation of the exemplary embodiment of Fig. 1A.

The tap aggregation system of Fig. 1B, generally designated 182, may in general, except as described herein, be similar to tap aggregation systems which are well known in the art, in which a plurality of leaf switches 184 (shown for sake of simplicity of description as leaf switch 1, leaf switch 2, and leaf switch n, it being appreciated that a smaller or larger number of leaf switches may be used) produce data which is aggregated at a network tap 186, for transmission onwards to one or more collector systems 188 (again, for sake of simplicity of description three collector systems 188 are shown, it being appreciated that a smaller or larger number of collector systems may be used.

In exemplary embodiments, the network tap 186 comprises a network information transmission system such as that shown and described with reference to Fig. 1A, so that it will be appreciated that the functions and advantages described above with reference to Fig. 1A can be realized in the case of a tap aggregation system.

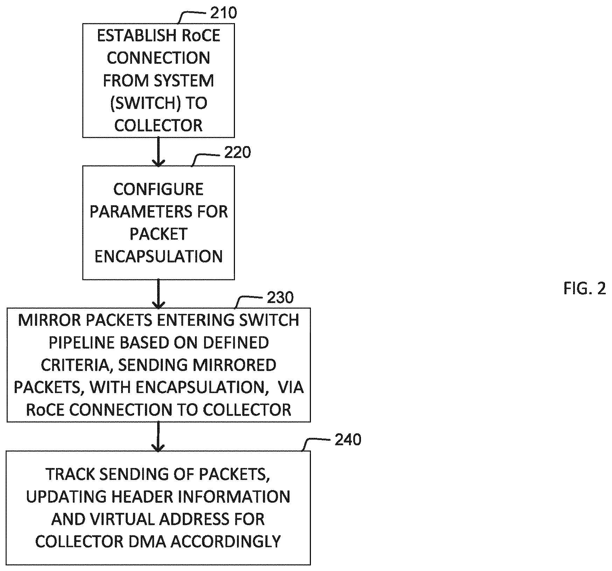

Reference is now additionally made to Fig. 2, which is a simplified flowchart illustration of an exemplary method of operation of the system of Fig. 1.

As described above, a RoCE connection is opened from the switch 100 to the collector 150 (step 210).

Parameters are configured for packet encapsulation (step 220). Without limiting the generality of the foregoing, the parameters are configured by a control plane, such as the switch control plane 102 of Fig. 1A. The following specific non-limiting example of appropriate encapsulation parameters relates to RoCEv2:
The following parameters are configured for initial encapsulation, these parameters being well-known in the art of RoCE:

- BTH header:
  (base) Virtual Address, Source/Destination Queue Pair, Partition key
- RETH header:
  Remote Key
- IPIUDP headers:
  Source/Destination IP, Source/Destination Port
- DMA length (configurable per session)

As is well known, switches generally have a pipeline architecture. In general, any packet entering a switch pipeline can be "mirrored"; in the case of exemplary embodiments of the present invention, mirroring may take place for sending the mirrored packet to the remote collector.

While mirroring of packets is described herein, and encapsulating and sending mirrored packets is described herein, this is only one non-limiting example of certain exemplary embodiments of the present invention. Packets may be chosen (as described immediately below in the case of mirroring), and their destination altered so that the packets are encapsulated and sent without mirroring, for example.

A non-limiting list of exemplary situations in which a packet might be mirrored for sending to the remote collector include:

flow-based reasons (based, by way of non-limiting example, on a match in a match action table; such reasons may include, by way of non-limiting example: input port; associated VLAN; user-defined rules in general; destination IP address 5-tuple [flow identifier], and so forth);
in a case of a dropped packet;
in a case of reaching a buffer threshold (such as reaching a low buffer-space-remaining level);
in a case of reaching a latency threshold (such as latency too high);
in a case of a packet entering the switch via a particular ingress port, or exiting the switch via a particular egress port (the particular ports being, in exemplary cases, determined in advance or determined dynamically); and
in a case where a packet is a control packet.

Packets entering the switch are mirrored based on defined criteria (such as in accordance with the exemplary situations described immediately above) and mirrored packets are sent, with encapsulation, via RoCE to the collector 150 (step 230). Packets continue to be sent; the switch 150 tracks the fact that additional packets are sent; and the switch updates information that is placed in the header/s of the subsequent packets, updating header information, and virtual address information for DMA at the collector 150, accordingly (step 240).

In exemplary embodiments of the present invention, when a first (initial) packet is mirrored at the switch for encapsulation and transmission to the collector, the first packet is encapsulated, generally in accordance with the parameters for initial encapsulation referred to above.

As subsequent packet/s are mirrored for encapsulation and transmission to the collector, RoCE header fields are updated by the switch before encapsulation, in accordance (following the example above) with the following:

the PSN (packet sequence number) is incremented with each packet sent;
the virtual address (at the collector) is updated as follows:

$$[\text{base address} + (\text{PSN} * \text{DMA length})] \% \text{ DMA\_COUNT}$$

In the virtual address update equation immediately above, DMA_COUNT indicates the maximum number of packets that may be put into the available memory space, such that one must "wrap around" when available space is full.

Each subsequent packet is then sent to the collector, via an IP network. It is appreciated that, in exemplary embodiments of the present invention, the IP network and the collector are not comprised in the exemplary embodiments.

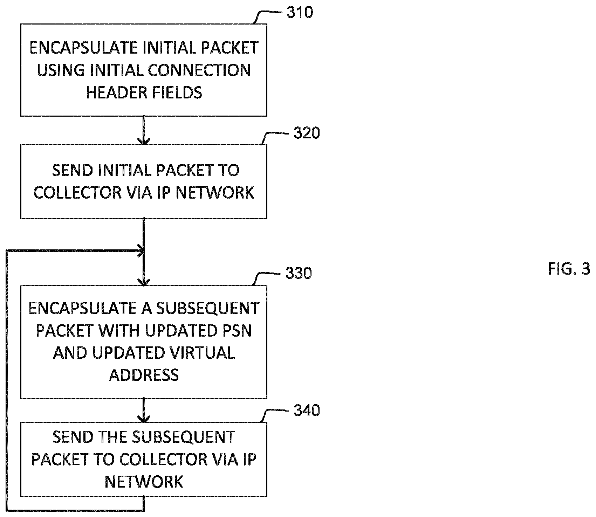

Reference is now additionally made to Fig. 3, which is a simplified flowchart illustration of an exemplary method of operation of a portion of the method of Fig. 2, specifically comprising encapsulation and sending of packets via RoCE over the (IP) network connection 145.

An initial packet is encapsulated using initial connection header fields, such as those described above with reference to RoCEv2 (step 310). The initial packet is sent to the collector 150 via the network connection 145 (step 320).

A subsequent packet is encapsulated, as described above, with an updated PSN and updated virtual address (step 330), and is sent to the collector 150 via the IP network 145 (step 330). The method then continues at step 330 for the next packet. No explicit end of the method of Fig. 3 is shown, indicating that an essentially unlimited number of packets may be sent from the switch 105 to the collector 150, it being appreciated that, in practice, at some point sending of packets may cease.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product or on a tangible medium. In some cases, it may be possible to instantiate the software components as a signal interpretable by an appropriate computer, although such an instantiation may be excluded in certain embodiments of the present invention.

It will be appreciated by persons skilled in the art that the present invention is not limited by what has been particularly shown and described hereinabove. Rather the scope of the invention is defined by the appended claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A network information transmission system comprising:
   a packet handling device (105) configured to duplicate or redirect one or more packets traversing the packet handling device, the packet handling device comprising:

   a control plane (102) configured to open a remote direct memory access, RDMA, connection (170) with a destination (150) external to the network information transmission system;
   an encapsulator (140) configured to encapsulate the one or more duplicated or redirected packets, producing one or more encapsulated packets; and
   a transmitter (142) configured to transmit said one or more encapsulated packets, via said RDMA connection, to the destination external to the network information transmission system.

2. The network information transmission system according to claim 1, and wherein said packet handling device comprises one of the following: a switch; and a router.

3. The network information transmission system according to claim 1 or 2, and wherein said one or more encapsulated packets comprise telemetry information.

4. The network information transmission system according to any preceding claim, and wherein the packet handling device further comprises a mirror decision unit (130) configured to duplicate said one or more packets before encapsulation thereof.

5. The network information transmission system according to any preceding claim, wherein said RDMA connection transits an internet protocol, IP, network (145).

6. The network information transmission system according to claim 5, wherein said RDMA connection comprises a RDMA over converged Ethernet, RoCE, connection.

7. The network information transmission system according to claim 6, wherein said RoCE connection comprises one of: an unreliable connection, UC; and a reliable connection.

8. The network information transmission system according to claim 7, wherein said RoCE connection comprises a RoCEv2 connection.

9. The network information transmission system according to any preceding claim, and wherein said destination external to the network information transmission system comprises a collector system.

10. The network information transmission system according to claim 9, wherein said collector system comprises a network element (160) and collector memory (180).

11. The network information transmission system according to claim 10, wherein said network element comprises a network interface controller, NIC.

12. A network information transmission method comprising:
    in a packet handling device (105) of a network information transmission system:

    duplicating or redirecting one or more packets traversing the packet handling device;
    opening a remote direct memory access, RDMA, connection (170) with a destination (150) external to the network information transmission system;
    encapsulating the one or more duplicated or redirected packets, producing one or more encapsulated packets;

and

transmitting said one or more encapsulated packets, via said RDMA connection, to the destination external to the network information transmission system.

13. The method according to claim 12, wherein said one or more encapsulated packets comprise telemetry information.

14. The method according to claim 12 or 13, further comprising duplicating said one or more packets before encapsulation thereof.

15. The method according to claim 12, 13, or 14, wherein said destination external to the network information transmission system comprises a collector system.

**Patentansprüche**

1. Ein Netzwerkinformationsübertragungssystem, das Folgendes umfasst:
eine Paket-Handling-Vorrichtung (105), die dazu konfiguriert ist, ein oder mehrere Pakete, die die Paket-Handling-Vorrichtung durchlaufen, zu duplizieren oder umzuleiten, wobei die Paket-Handling-Vorrichtung Folgendes umfasst:

eine Steuerungsebene (102), die dazu konfiguriert ist, eine entfernte direkte Speicherzugriffsverbindung, RDMA(Remote Direct Memory Access)-Verbindung, (170) mit einer Destination (150) außerhalb des Netzwerkinformationsübertragungssystems zu öffnen;
einen Einkapseler (140), der dazu konfiguriert ist, dass eine oder die mehreren duplizierten oder umgeleiteten Pakete einzukapseln, sodass ein oder mehrere eingekapselte Pakete produziert werden; und
einen Sender (142), der dazu konfiguriert ist, das genannte eine oder die genannten mehreren eingekapselten Pakete, über die genannte RDMA-Verbindung, an die Destination außerhalb des Netzwerkinformationsübertragungssystems zu übertragen.

2. Netzwerkinformationsübertragungssystem gemäß Anspruch 1 und wobei die genannte Paket-Handling-Vorrichtung eines von Folgendem umfasst: einen Schalter; und einen Router.

3. Netzwerkinformationsübertragungssystem gemäß Anspruch 1 oder 2 und wobei das genannte eine oder die genannten mehreren eingekapselten Pakete Telemetrieinformationen umfassen.

4. Netzwerkinformationsübertragungssystem gemäß einem vorhergehenden Anspruch und wobei die Paket-Handling-Vorrichtung ferner eine Spiegelentscheidungseinheit (130) umfasst, die dazu konfiguriert ist, das genannte eine oder die genannten mehreren Pakete vor der Einkapselung von diesen zu duplizieren.

5. Netzwerkinformationsübertragungssystem gemäß einem vorhergehenden Anspruch, wobei die genannte RDMA-Verbindung ein Internetprotokoll-Netzwerk, IP-Netzwerk, (145) durchquert.

6. Netzwerkinformationsübertragungssystem gemäß Anspruch 5, wobei die genannte RDMA-Verbindung eine RDMAover-converged-Ethernet-Verbindung, RoCE-Verbindung, umfasst.

7. Netzwerkinformationsübertragungssystem gemäß Anspruch 6, wobei die genannte RoCE-Verbindung eines von Folgendem umfasst: eine unzuverlässige Verbindung, UC (Unreliable Connection); und eine zuverlässige Verbindung.

8. Netzwerkinformationsübertragungssystem gemäß Anspruch 7, wobei die genannte RoCE-Verbindung eine RoCEv2-Verbindung umfasst.

9. Netzwerkinformationsübertragungssystem gemäß einem vorhergehenden Anspruch und wobei die genannte Destination außerhalb des Netzwerkinformationsübertragungssystems ein Kollektorsystem umfasst.

10. Netzwerkinformationsübertragungssystem gemäß Anspruch 9, wobei das genannte Kollektorspeichersystem ein Netzwerkelement (160) und einen Kollektorspeicher (180) umfasst.

11. Netzwerkinformationsübertragungssystem gemäß Anspruch 10, wobei das genannte Netzwerkelement einen Netzwerkschnittstellencontrollers, NIC (Network Interface Controller), umfasst.

12. Ein Netzwerkinformationsübertragungsverfahren, das Folgendes umfasst:
in einer Paket-Handling-Vorrichtung (105) eines Netzwerkinformationsübertragungssystems:

Duplizieren oder Umleiten von einem oder mehreren Paketen, die die Paket-Handling-Vorrichtung durchlaufen;
Öffnen einer entfernten direkten Speicherzugriffsverbindung, RDMA-Verbindung, (170) mit einer Destination (150) außerhalb des Netzwerkinformationsübertragungssystems;
Einkapseln des einen oder der mehreren duplizierten oder umgeleiteten Pakete, sodass ein oder mehrere eingekapselte Pakete produziert werden; und
Übertragen des genannten einen oder der genannten mehreren eingekapselten Pakete, über die genannte RDMA-Verbindung, an die Destination außerhalb des Netzwerkinformationsübertragungssystems.

13. Verfahren gemäß Anspruch 12, wobei das genannte eine oder die genannten mehreren eingekapselten Pakete Telemetrieinformationen umfassen.

14. Verfahren gemäß Anspruch 12 oder 13, das ferner das Duplizieren des genannten einen oder der genannten mehreren Pakete vor der Einkapselung von diesen umfasst.

15. Verfahren gemäß Anspruch 12, 13 oder 14, wobei die genannte Destination außerhalb des Netzwerkinformationsübertragungssystems ein Kollektorsystem umfasst.

**Revendications**

1. Système de transmission d'informations réseau comprenant :
un dispositif de traitement des paquets (105) configuré pour dupliquer ou rediriger un ou plusieurs paquets traversant le dispositif de traitement des paquets, le dispositif de traitement des paquets comprenant :

un plan de commande (102) configuré pour ouvrir une connexion d'accès direct à la mémoire à distance, RDMA, (170) avec une destination (150) extérieure au système de transmission d'informations réseau ;
un encapsulateur (140) configuré pour encapsuler le ou les paquets dupliqués ou redirigés, produisant un ou plusieurs paquets encapsulés ; et
un transmetteur (142) configuré pour transmettre ledit ou lesdits paquets encapsulés, par l'intermédiaire de ladite connexion RDMA, à la destination extérieure au système de transmission d'informations réseau.

2. Système de transmission d'informations réseau selon la revendication 1, et
dans lequel ledit dispositif de traitement des paquets comprend l'un de ce qui suit : un commutateur ; et un routeur.

3. Système de transmission d'informations réseau selon la revendication 1 ou 2,
et dans lequel ledit ou lesdits paquets encapsulés comprennent des informations de télémétrie.

4. Système de transmission d'informations réseau selon l'une quelconque des revendications précédentes, et dans lequel le dispositif de traitement des paquets comprend en outre une unité de décision miroir (130) configurée pour dupliquer ledit ou lesdits paquets avant leur encapsulation.

5. Système de transmission d'informations réseau selon l'une quelconque des revendications précédentes, dans lequel ladite connexion RDMA transite par un réseau à protocole Internet, IP, (145).

6. Système de transmission d'informations réseau selon la revendication 5,
dans lequel ladite connexion RDMA comprend une connexion RDMA sur Ethernet convergé, RoCE.

7. Système de transmission d'informations réseau selon la revendication 6,
dans lequel ladite connexion RoCE comprend l'un parmi : une connexion non fiable, UC ; et une connexion fiable.

8. Système de transmission d'informations réseau selon la revendication 7,
dans lequel ladite connexion RoCE comprend une connexion RoCEv2.

**9.** Système de transmission d'informations réseau selon l'une quelconque revendication précédente, et dans lequel ladite destination extérieure au système de transmission d'informations réseau comprend un système de collecteur.

**10.** Système de transmission d'informations réseau selon la revendication 9,
dans lequel ledit système de collecteur comprend un élément de réseau (160) et une mémoire de collecteur (180).

**11.** Système de transmission d'informations réseau selon la revendication 10,
dans lequel ledit élément de réseau comprend un contrôleur d'interface de réseau (NIC).

**12.** Procédé de transmission d'informations réseau comprenant :
dans un dispositif de traitement des paquets (105) d'un système de transmission d'informations réseau :

la duplication ou la redirection d'un ou plusieurs paquets traversant le dispositif de traitement des paquets ;
l'ouverture d'une connexion d'accès direct à la mémoire à distance, RDMA, (170) avec une destination (150) extérieure au système de transmission d'informations réseau ;
l'encapsulation du ou des paquets dupliqués ou redirigés,
la production d'un ou plusieurs paquets encapsulés ; et
la transmission dudit ou desdits paquets encapsulés, par l'intermédiaire de ladite connexion RDMA, à la destination extérieure au système de transmission d'informations réseau.

**13.** Procédé selon la revendication 12, dans lequel ledit ou lesdits paquets encapsulés comprennent des informations de télémétrie.

**14.** procédé selon la revendication 12 ou 13, comprenant en outre la duplication dudit ou desdits paquets avant leur encapsulation.

**15.** procédé selon la revendication 12, 13 ou 14, dans lequel ladite destination extérieure au système de transmission d'informations réseau comprend un système de collecteur.

FIG. 1A

FIG. 1B

FIG. 2

EP 3 890 279 B1

```
┌──────────────────────────┐  ─ 310
│  ENCAPSULATE INITIAL PACKET │
│  USING INITIAL CONNECTION   │
│      HEADER FIELDS          │
└──────────────────────────┘
            │
            ▼
┌──────────────────────────┐  ─ 320
│   SEND INITIAL PACKET TO    │
│  COLLECTOR VIA IP NETWORK   │
└──────────────────────────┘
            │
            ▼
┌──────────────────────────┐  ─ 330
│  ENCAPSULATE A SUBSEQUENT   │
│  PACKET WITH UPDATED PSN    │
│   AND UPDATED VIRTUAL       │
│        ADDRESS              │
└──────────────────────────┘
            │
            ▼
┌──────────────────────────┐  ─ 340
│    SEND THE SUBSEQUENT      │
│  PACKET TO COLLECTOR VIA IP │
│        NETWORK              │
└──────────────────────────┘
```

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110704361 A

- US 7013419 B, Kagan